(19) Europäisches Patentamt
European Patent Office
Office européen des brevets

(11) **EP 4 575 878 A1**

(12) **EUROPEAN PATENT APPLICATION**
published in accordance with Art. 153(4) EPC

(43) Date of publication:
**25.06.2025 Bulletin 2025/26**

(21) Application number: **23876948.3**

(22) Date of filing: **14.06.2023**

(51) International Patent Classification (IPC):
**G06F 30/23** *(2020.01)* **B21D 22/00** *(2006.01)*
**G06F 113/22** *(2020.01)*

(52) Cooperative Patent Classification (CPC):
**B21D 22/00; G06F 30/23; G06F 2113/22**

(86) International application number:
**PCT/JP2023/022068**

(87) International publication number:
**WO 2024/079939 (18.04.2024 Gazette 2024/16)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **14.10.2022 JP 2022165324**

(71) Applicant: **JFE Steel Corporation**
**Tokyo 100-0011 (JP)**

(72) Inventor: **KISHIGAMI, Yasuhiro**
**Tokyo 100-0011 (JP)**

(74) Representative: **Grünecker Patent- und Rechtsanwälte**
**PartG mbB**
**Leopoldstraße 4**
**80802 München (DE)**

(54) **PRESS FORMING ANALYSIS METHOD AND DEVICE, PRESS FORMING ANALYSIS PROGRAM, AND PRESS-FORMED PRODUCT MANUFACTURING METHOD**

(57) A press forming analysis method according to the present invention includes: a die model generating step (S1) of generating a die model having a virtual thickness by a two-dimensional element and setting a boundary condition of the two-dimensional element such that a part corresponding to a rib in a real die is a rigid body and a part other than the rib is a nonrigidity; and a press forming load acquiring step (S3) of performing press forming analysis using a die model generated by the die model generating step (S1), and acquiring a press forming load.

# FIG.1

## Description

Field

The present invention relates to press forming analysis method and device enabling prediction of a press forming load acting on a press forming die associated with press working of a metal member, a press forming analysis program for causing a computer to function as a press forming analysis device, and a press formed part manufacturing method. In the present specification, the metal member includes a hot rolled steel sheet, a cold rolled steel sheet, a surface treated steel sheet obtained by subjecting a steel sheet to surface treatment (electro-galvanizing, hot-dip galvanizing, organic finishing, etc.), and a metal sheet made of various metals such as stainless steel (SUS), aluminum, and magnesium.

Background

Application of a high-tensile steel sheet to an automotive body is expanding due to increasing needs for improvement of fuel efficiency and improvement of collision safety by weight reduction of automobiles. A high-tensile steel sheet has problems in application such as deterioration of formability due to low ductility and deterioration of dimensional accuracy due to high material strength.

In addition, a press forming load increases when a high-tensile steel sheet is press formed, and in a case where the press forming load exceeds a predetermined value in relation to a press machine, it is necessary to change a press line or to divide components. Therefore, a press forming analysis method enabling accurate prediction of a press forming load in advance is required.

In this respect, Patent Literature 1 proposes a method of obtaining a correlation approximate equation of a forming load at a bottom dead center of press in a real machine and a forming load at a stroke before the bottom dead center of press by press forming analysis, and obtaining a press forming load from the correlation approximate equation.

Citation List

Patent Literature

Patent Literature 1: JP 5610574 B2

Summary

Technical Problem

In the method recited in Patent Literature 1, since it is necessary to obtain a press forming load at a bottom dead center of press in a real machine in advance, it is not possible to predict a press forming load in a new component shape or material in advance.

The present invention has been made to solve the above problems, and an object of the present invention is to provide press forming analysis method and device enabling prediction of a press forming load acting on a press forming die in advance when a new component shape or material is press formed. Another object of the present invention is to provide a press forming analysis program that causes a computer to function as the press forming analysis device. A further object of the present invention is to provide a press formed part manufacturing method for manufacturing a press formed part by a press machine selected on the basis of a press forming load predicted by a press forming analysis method.

Solution to Problem

A press forming analysis method according to the present invention predicts a press forming load acting on a press forming die, and includes: a die model generating step of generating a die model having a virtual thickness by a two-dimensional element, and setting a boundary condition of the two-dimensional element such that a part corresponding to a rib in a real die is a rigid body and a part other than the rib is a nonrigidity; and a press forming load acquiring step of performing press forming analysis using the die model generated by the die model generating step to acquire a press forming load, wherein the die model generating step includes offsetting arrangement of the two-dimensional element by a predetermined distance from a die-face in order to impart the virtual thickness to the die model, and setting the boundary condition of the two-dimensional element such that deflection of the die model is equivalent to deflection of the real die according to an offset amount.

The boundary condition in the die model generating step may include any one or a combination of displacement restraint, elastic coefficient, sheet thickness, density, mass, and yield strength.

The two-dimensional element may be an elastic or elastoplastic two-dimensional element.

A press forming analysis device according to the present invention predicts a press forming load acting on a press forming die, and includes: a die model generation unit configured to generate a die model having a virtual thickness by a two-dimensional element, and set a boundary condition of the two-dimensional element such that a part corresponding to a rib in a real die is a rigid body and a part other than the rib is a nonrigidity; and a press forming load acquisition unit configured to perform press forming analysis using the die model generated by the die model generation unit to acquire a press forming load, wherein the die model generation unit is configured to offset arrangement of the two-dimensional element by a predetermined distance from a die-face in order to impart the virtual thickness to the die model, and set the boundary condition of the two-dimensional element such that deflection of the die model is equivalent to deflection of the real die according to an offset amount.

A press forming analysis program according to the present invention causes a computer to function as the press forming analysis device according to the present invention.

A press formed part manufacturing method according to the present invention includes: a step of acquiring the press forming load by the press forming analysis method according to the present invention; a press machine selecting step of selecting an appropriate press machine having a pressing capacity for the acquired press forming load; and a press forming step of performing press forming using the press machine.

Advantageous Effects of Invention

According to the present invention, it is possible to accurately predict a press forming load acting on a press forming die in advance when press forming a new component shape or material. As a result, it is possible to select a press machine having an appropriate pressurizing capacity for manufacturing a component. Furthermore, by selecting a press machine having an appropriate pressurizing capacity and press forming a press formed part, it is possible to suppress a decrease in a life of the press forming die due to elastic deformation of a frame or the like of the press machine, and it is possible to suppress occurrence of burr or the like of a press formed part and to improve production efficiency. Brief Description of Drawings

[FIG. 1] FIG. 1 is a flowchart of a press forming analysis method according to a first embodiment.
[FIG. 2] FIG. 2 is a block diagram illustrating a configuration of a press forming analysis device according to a second embodiment.
[FIG. 3] FIG. 3 is an explanatory view of a component shape targeted in Example 1.
[FIG. 4] FIGS. 4(a) and 4(b) are explanatory views of a die used in Example 1, FIG. 4(a) illustrating a forming surface and FIG. 4(b) illustrating a lower surface of the die.
[FIG. 5] FIG. 5 is a view illustrating a die model of a conventional example generated by a conventional method.
[FIG. 6] FIG. 6 is a view illustrating a die model of an invention example generated by a method of the present invention.
[FIG. 7] FIG. 7 is an explanatory view of a method of imparting a virtual thickness to a die model formed by a two-dimensional element (part 1).
[FIG. 8] FIG. 8 is an explanatory view of the method of imparting the virtual thickness to the die model formed by the two-dimensional element (part 2).
[FIG. 9] FIG. 9 is an explanatory view of the method of imparting the virtual thickness to the die model formed by the two-dimensional element (part 3).
[FIG. 10] FIG. 10 is a view for explaining an idea of an equivalent elastic coefficient in Example 1.
[FIG. 11] FIG. 11 is a graph showing an analysis result of Example 1.
[FIG. 12] FIG. 12 is an explanatory view of a component shape targeted in Example 2.
[FIG. 13] FIG. 13 is a graph showing an analysis result of Example 2 and a necessary press machine capacity based on the analysis result.

Description of Embodiments

First, circumstances leading to the present invention will be described. In studying a press forming analysis method enabling prediction of a press forming load using press forming analysis by a finite element method (FEM), the inventors first examined a reason why a press forming load cannot be accurately predicted.

In general, a two-dimensional element as a rigid body is applied to modeling of a press forming die in the finite element method. In press forming analysis using such a two-dimensional element, a press forming load rapidly increases near a bottom dead center of press forming. The inventors have studied this phenomenon, and have found that since the press forming die, which is originally an elastic-plastic body, is treated as a rigid body that is not deformed at all, deformation of the die at the bottom dead center of press forming is not reproduced, and only a press formed part 21 (blank) is excessively deformed.

Then, in order to accurately predict a press forming load, the inventors considered it necessary to perform press forming analysis taking deformation of the press forming die into consideration. In this respect, while press forming analysis is performed in which a structure of the press forming die is expressed by a solid element (three-dimensional element) as a nonrigidity and deformation of the press forming die is taken into consideration, calculation time is enormous to make this press forming analysis unsuitable for practical use. Therefore, a method in which deformation of a press forming die is considered with a shell element (two-dimensional element) having a short calculation time was examined. Then, the present inventors have concluded that with a surface of the press forming die as a non-rigid (elastic or elastoplastic) shell model (two-dimensional element) formed to have a virtual thickness, the press forming die may be modeled, and stiffness may be imparted according to a boundary condition.

The present invention has been made on the basis of the above results of the study, and has specific configurations set forth below.

[First Embodiment]

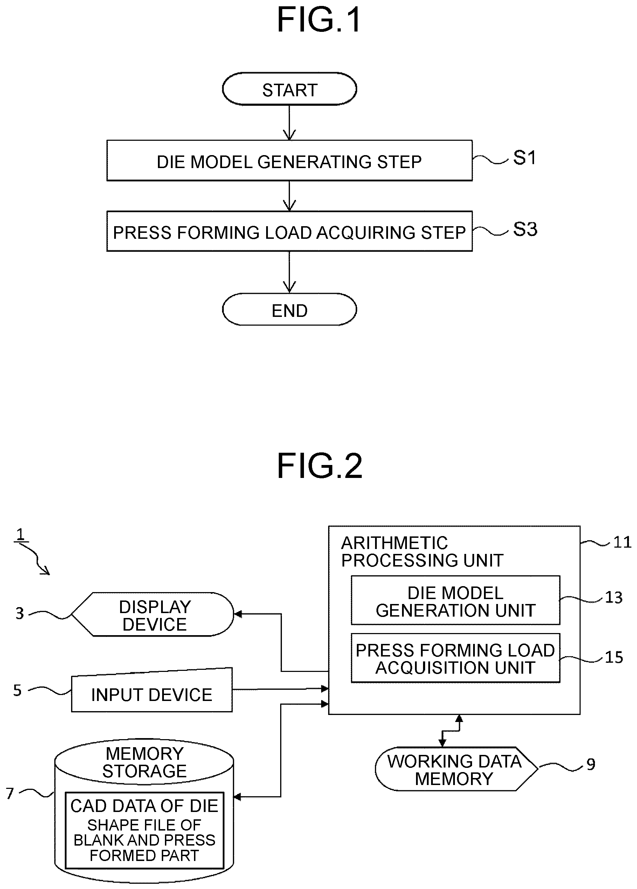

A press forming analysis method according to the present invention is a press forming analysis method enabling prediction of a press forming load acting on a press forming die, and includes a die model generating step(S1) and a press forming load acquiring step (S3) as illustrated in FIG. 1. In the following, each step will be described in detail.

<Die Model Generating Step>

The die model generating step (S1) is a step of generating a die model having a virtual thickness by a two-dimensional element, and setting a boundary condition of the two-dimensional element so that a part corresponding to a rib in a real die is a rigid body and a part other than the rib is a nonrigidity.

Then, in order to make the die model have a virtual thickness, arrangement of the two-dimensional element is offset by a predetermined distance from a die-face, and a boundary condition of the two-dimensional element is set according to an offset amount such that deflection of the die model is equivalent to deflection of the real die. The boundary condition in the die model generating step (S1) includes any one or a combination of displacement restraint, elastic coefficient, sheet thickness, density, mass, and yield strength. The two-dimensional element may be an elastic or elastoplastic two-dimensional element.

<Press Forming Load Acquiring Step>

The press forming load acquiring step (S3) is a step of performing press forming analysis using the die model generated by the die model generating step (S1) to acquire a press forming load. The obtained press forming load may be a load applied to the entire press forming die, or a surface pressure distribution of the press forming die.

In the present embodiment, with a surface of the press forming die as a non-rigid (elastic or elastoplastic) shell model (two-dimensional element) formed to have a virtual thickness, the press forming die is modeled, and stiffness is imparted according to a boundary condition. For this reason, calculation of press forming analysis by the finite element method for acquiring a press forming load does not take time, and thus, the calculation time can be shortened as compared with press forming analysis using a non-rigid solid element (three-dimensional element) in the structure of the press forming die. In addition, since it is sufficient to change the boundary condition when changing setting of stiffness distributions of the die model, it is not necessary to model the die model each time, and a press forming die structure enabling reduction of a press forming load can be designed in a short time.

[Second Embodiment]

The press forming analysis method described in the first embodiment can be realized by causing a computer to execute a preset program. A press forming analysis device as an example of such a device will be described in the present embodiment. As illustrated in FIG. 2, a press forming analysis device 1 according to the present embodiment is configured by a computer such as a personal computer (PC), and has a display device 3, an input device 5, a memory storage 7, a working data memory 9, and an arithmetic processing unit 11. Then, the display device 3, the input device 5, the memory storage 7, and the working data memory 9 are connected to the arithmetic processing unit 11, and the respective functions are executed by a command from the arithmetic processing unit 11. In the following, each configuration of the press forming analysis device 1 according to the present embodiment will be described.

<<Display Device>>

The display device 3 is used for displaying an analysis result or the like, and is configured by an LCD monitor or the like.

<<Input Device>>

The input device 5 is used for a display instruction of a blank, a press formed part, or the like, a condition input by an operator, or the like, and is configured by a keyboard, a mouse, or the like.

<<Memory Storage>>

The memory storage 7 is used for storing various files such as CAD data of a die, shape files of a blank and a press formed part, and the like, and is configured by a hard disk or the like.

<<Working Data Memory>>

The working data memory 9 is used for temporary storage and calculation of data for use by the arithmetic processing unit 11, and is configured by a random access memory (RAM) or the like.

<<Arithmetic Processing Unit>>

As illustrated in FIG. 2, the arithmetic processing unit 11 has a die model generation unit 13 and a press forming load acquisition unit 15, and is configured by a central processing unit (CPU). Each of these units functions when the CPU executes a predetermined program. The functions of the above units in the arithmetic processing unit 11 will be described below.

The die model generation unit 13 generates a die model having a virtual thickness by a two-dimensional element, and sets a boundary condition of the two-dimensional element so that a part corresponding to a rib in a real die is a rigid body and a part other than the rib is a nonrigidity. The die model generation unit 13 executes the die model generating step (S1) described in the first embodiment.

The press forming load acquisition unit 15 performs press forming analysis using a die model in which stiffness distributions are set, and acquires a press forming load. The press forming load acquisition unit 15 executes the press forming load acquiring step (S3) described in the first embodiment.

According to the press forming analysis device 1 of the present embodiment, as in the first embodiment, it is possible to design, in a short time, a structure of a press forming die enabling reduction of a press forming load.

As described above, the die model generation unit 13 and the press forming load acquisition unit 15 in the press forming analysis device 1 of the present embodiment are realized by the CPU executing a predetermined program. Therefore, a press forming analysis program according to the present invention can be specified to cause a computer to function as the die model generation unit 13 and the press forming load acquisition unit 15.

[Example 1]

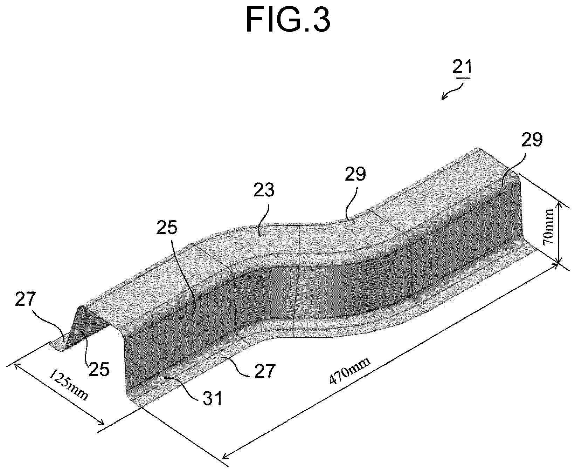

Description will be made below of a specific press forming analysis performed in order to confirm an effect of the present invention. FIG. 3 illustrates a component shape of the press formed part 21 as a target of an Example. The press formed part 21 is curved in a substantially S-shape in plan view, and has a hat-shaped cross section including a top portion 23, side wall portions 25 on opposite sides of the top portion 23, and a flange portion 27 at a lower end of the side wall portion 25. A shoulder part 29 of a punch connecting the top portion 23 and the side wall portion 25 and a shoulder part 31 of a die connecting the side wall portion 25 and the flange portion 27 have a curvature radius of 6 mm. In addition, the press formed part 21 is made of a 1180 MPa-grade high-tensile cold rolled steel sheet having a sheet thickness of 1.6 mm.

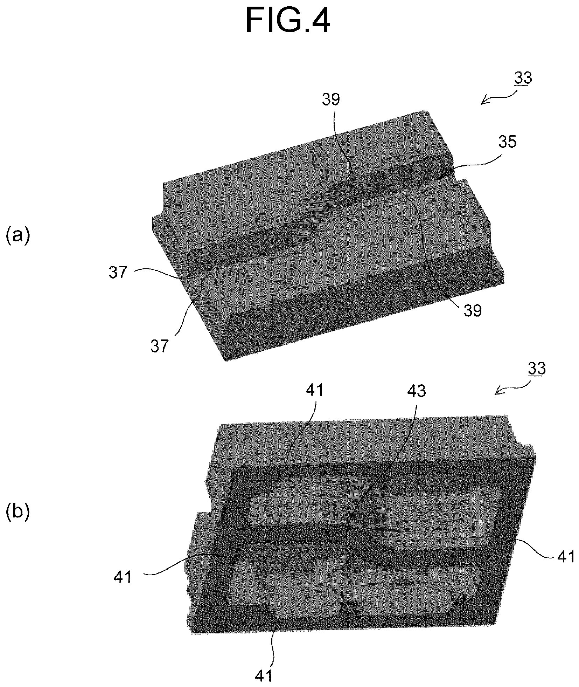

A die 33 for forming the press formed part 21 illustrated in FIG. 3 is illustrated in FIG. 4. The die 33 illustrated in FIG. 4 corresponds to a die out of the die 33 (a punch, a die, and the like) forming the component illustrated in FIG. 3, and a punch or the like which is another die 33 has a shape corresponding to the die. In the following description, the die 33 illustrated in FIG. 4 will be described as an example.

As illustrated in FIG. 4(a), a groove shape portion (groove shape portion) 35 corresponding to the component is formed on a forming surface side of the die 33. On each of opposite sides of a groove bottom, there is a first rounded part 37 corresponding to the shoulder part 29 of a punch of the press formed part 21, and at an inlet of the groove, there are second rounded parts 39 corresponding to the shoulder parts 31 of a die of the press formed part 21. The first rounded part 37 and the second rounded part 39 each have a curvature radius of 6 mm. In addition, as illustrated in FIG. 4(b), the die 33 has a peripheral edge formed to be a rib portion (rib portion) 41 which is not deformed, and has a portion 43 corresponding to rib as a portion corresponding to the groove bottom, the portion being not to be deformed. Portions other than the rib portion 41 and the portion 43 corresponding to rib are parts which are deformed and have a thickness of 30 mm.

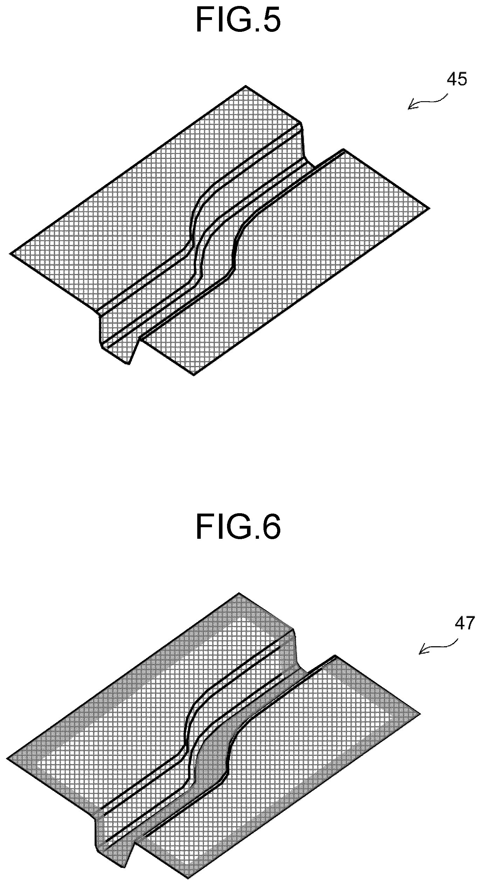

In the present Example, a forming load is obtained by performing press forming analysis using a conventional die model 45 (see FIG. 5) obtained by modeling the die 33 illustrated in FIG. 4 with shell elements and a die model 47 of an invention example (see FIG. 6) modeled by applying the present invention. Then, the forming load obtained by the press forming analysis is compared with a forming load in a real machine.

The conventional die model 45 illustrated in FIG. 5 is obtained by simply arranging a mesh model of a two-dimensional element (shell element) on a die-face in contact with a blank without considering die deformation, and setting the entire mesh as a rigid body. On the other hand, in the die model 47 of the invention example, the two-dimensional element (shell element) is set as a nonrigidity, and die deformation within an elastic range is taken into consideration. In other words, in the die model 47 of the invention example, a die model in which a mesh model formed by a two-dimensional element has a virtual thickness is generated, and a boundary condition of the two-dimensional element is set such that parts of the real die corresponding to the rib portion 41 and to the portion 43 corresponding to rib are rigid bodies and the remaining part is a nonrigidity. In FIG. 6, the color of the rigid body is dark gray.

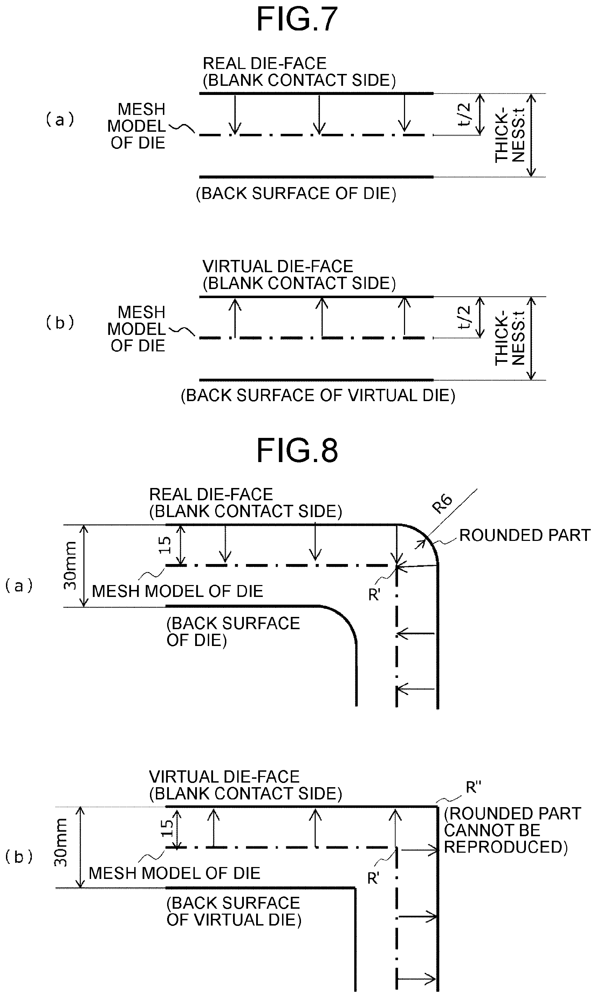

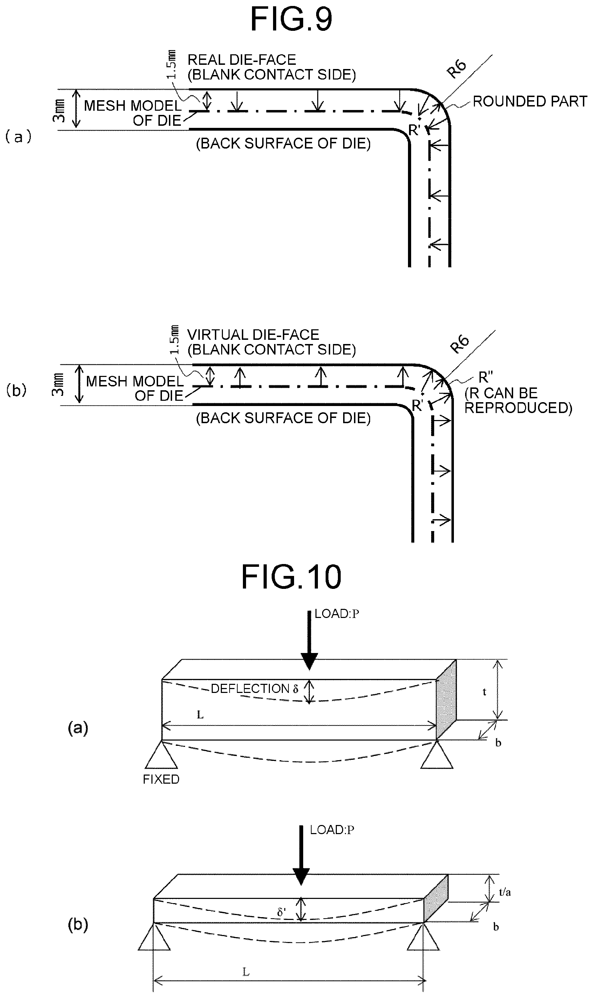

Description will made of a method for imparting a virtual die thickness to a mesh model (die model) formed by a two-dimensional element with reference to FIG. 7 schematically illustrating a cross section of a flat portion (other than the rounded parts) of the die. In order to impart a virtual die thickness to the mesh model formed by the two-dimensional element, a virtual die thickness t is set as illustrated in FIG. 7(a). Then, a mesh model (mesh model of die) formed by a two-dimensional element is arranged at a position offset by 1/2 (t/2) of the die thickness t in a vertical direction from a real die-face (blank contact side) toward the center of the thickness of the die, i.e., at a center position of the thickness of the virtual die. In addition, as illustrated in FIG. 7(b), a virtual die-face on the side in contact with the blank in the die model is set at a position offset by 1/2 (t/2) of the die thickness t in the vertical direction from the mesh model of the die toward the die-face on the side in contact with the blank. In FIG. 7, an arrow indicates an offset direction (the same applies to FIGS. 8 and 9).

As described above, the die 33 of the present Example is a die having the thickness of 30 mm and having the shoulder part 29 of a punch and the shoulder part 31 of a die (rounded part) which have the curvature radius of 6 mm. A die model generation example in the die 33 of the present Example will be described with reference to FIGS. 8 and 9 schematically illustrating a die cross section in which the rounded part connects a horizontal flat portion and a vertical flat portion of the die. FIG. 8 illustrates a case where the virtual thickness t of the die model is 30 mm which is the same as the thickness of the die 33. As illustrated in FIG. 8(a), the mesh model of die is arranged at a position offset by 15 mm (> the curvature radius of 6 mm of the rounded part), which is 1/2 of the thickness of 30 mm of the die 33, perpendicularly from the die-face (the blank contact side) including the rounded part having the curvature radius of 6 mm of the die 33 toward the center of the thickness of the die, i.e., at the center position of the virtual die thickness. In this case, since the offset amount of 15 mm from the die-face exceeds the curvature radius of 6 mm of the rounded part, a part corresponding to the rounded part on the mesh model of die becomes a corner (R') having a curvature radius of 0 mm. Then, as illustrated in FIG. 8(b), a virtual die-face of the die model is set at a position offset by 15 mm, which is 1/2 of the die thickness of 30 mm, in the vertical direction from the mesh model of die toward the die-face on the blank contact side. As a result, a part corresponding to the rounded part on the virtual die-face of the die model becomes a corner (R") having a curvature radius of 0 mm. In other words, assuming a mesh model of die offset on the basis of the actual thickness of 30 mm of the die 33, a rounded part is not reproduced on the virtual die-face of the die model. Therefore, the virtual die thickness t imparted to the mesh model (die model) formed by the two-dimensional element needs to be set within a range in which the offset amount (t/2) from the die-face does not exceed the curvature radius of the rounded part of the die so that the rounded part of the die can be reproduced on the virtual die-face of the die model.

In FIG. 9, the virtual die thickness t imparted to the mesh model (die model) formed by the two-dimensional element is set so as to have an offset amount that enables reproduction of the rounded part of the real die 33 on the virtual die-face of the die model. Specifically, the virtual thickness t of the die model was set to 3 mm, which is 1/10 of the thickness of 30 mm of the real die 33, and the offset amount (t/2) from the die-face was set to 1.5 mm (< the curvature radius of 6 mm of the rounded part). As a result, as illustrated in FIG. 9(a), the mesh model of die has a curvature corresponding to the rounded part, and as illustrated in FIG. 9(b), the rounded part of the real die 33 can be reproduced on the virtual die-face of the die model. However, in the case of FIG. 9, the analytical die thickness (3 mm) becomes thinner than the thickness (30 mm) of the real die 33, and the stiffness of the real die 33 cannot be reproduced. Therefore, when the offset amount of the two-dimensional element from the die-face was decided so that the die-face of the real die 33 can be reproduced, an elastic coefficient (Young's modulus) of the two-dimensional element was also corrected so that a deflection amount of the die model (two-dimensional element) having the virtual thickness and a deflection amount of the real die 33 become the same (hereinafter, a corrected elastic coefficient is referred to as "equivalent elastic coefficient").

In the following, an idea of the equivalent elastic coefficient will be described with reference to FIG. 10. Illustration of FIG. 10 is made assuming elastic deformation of the die-face as deformation of a simple beam. FIG. 10(a) illustrates a case of the thickness t of the real die, and FIG. 10(b) illustrates a case where the thickness is t/a. When considered in this manner, an equivalent elastic coefficient Ec (MPa) is obtained by multiplying an elastic coefficient E (MPa) of the real die by the cube of a thickness ratio a (thickness of actual die/virtual thickness in two-dimensional element) as shown in Expression (1).

$$Ec = E \cdot a^3 \qquad\qquad\qquad (1)$$

A boundary condition under which the two-dimensional element is set such that the deflection of the die model is equivalent to the deflection of the real die according to the offset amount may be appropriately selected from any one or a combination of the elastic coefficient, the displacement restraint, the sheet thickness, the density, the mass, and the yield strength as described in the above-described embodiment.

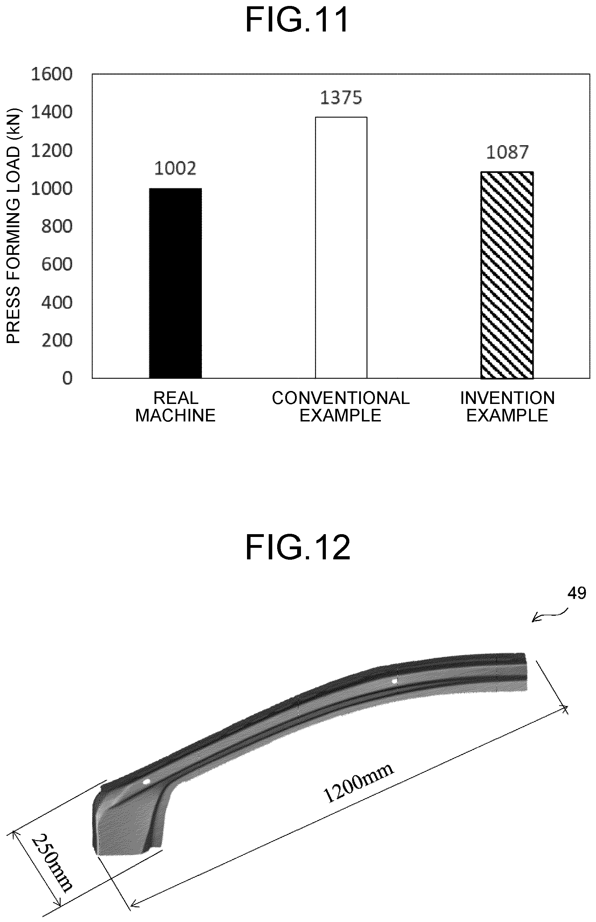

In addition, in the analysis in the Example, it was assumed that the rib portion 41 and the portion 43 corresponding to rib had sufficiently high die stiffness in a pressing direction, and displacement in the pressing direction was restrained. FIG. 11 shows a press forming load of the real machine, and forming load prediction results obtained by the conventional die model 45 illustrated in FIG. 5 and the die model 47 of the invention example illustrated in FIG. 6. While the press forming load of the real machine was 1002 kN and the forming load of the conventional example was 1375 kN, which was 137% of the real machine, the forming load of the invention example was 1087 kN, which was 108% of the real machine, and it can be found that the forming load prediction accuracy was improved.

[Example 2]

Next, as an effect of applying the present invention, rational selection of a press machine will be described with reference to a specific example. FIG. 12 illustrates a shape of a component 49 targeted in the present Example. The component 49 is made of a 1180 MPa-grade high-tensile cold rolled steel sheet having a sheet thickness of 1.4 mm. Regarding the component 49, press forming analyses using the die models of the conventional example and the invention example were performed in the same manner as in Example 1 to obtain forming loads of 4225 kN and 3300 kN, respectively.

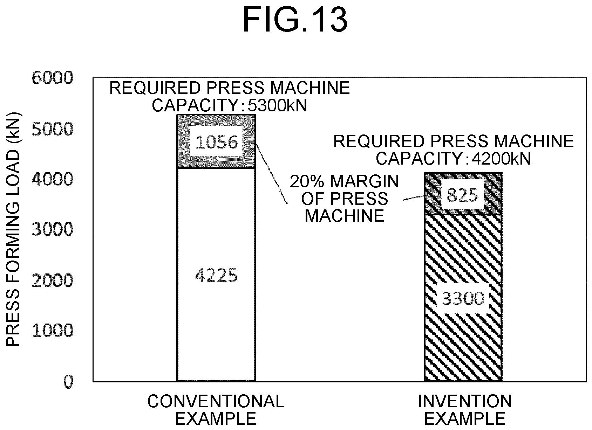

A press machine is generally selected so as to have a forming load which is 80% or less of a capacity of the press machine. FIG. 13 shows a graph obtained by obtaining a press machine capacity estimated from forming load prediction results of the conventional example and the invention example. As illustrated in FIG. 13, in the conventional example, a press machine having a capacity of 5300 kN or more is selected with a margin of 20% with respect to the load prediction of 4225 kN. On the other hand, since in the invention example, the load prediction is 3300 kN, the selected press machine is 4200 kN or more, making it possible to select a more appropriate press machine.

Industrial Applicability

According to the present invention, it is possible to provide press forming analysis method and device enabling prediction of a press forming load acting on a press forming die in advance when a new component shape or material is press-formed. In addition, according to the present invention, it is possible to provide a press forming analysis program that causes a computer to function as the press forming analysis device. Furthermore, according to the present invention, it is possible to provide a press formed part manufacturing method for manufacturing a press formed part by a press machine selected on the basis of a press forming load predicted by a press forming analysis method.

Reference Signs List

1    PRESS FORMING ANALYSIS DEVICE

3    DISPLAY DEVICE

5    INPUT DEVICE

7    MEMORY STORAGE

9    WORKING DATA MEMORY

11    ARITHMETIC PROCESSING UNIT

# EP 4 575 878 A1

13    DIE MODEL GENERATION UNIT

15    PRESS FORMING LOAD ACQUISITION UNIT

21    PRESS FORMED PART

23    TOP PORTION

25    SIDE WALL PORTION

27    FLANGE PORTION

29    SHOULDER PART OF A PUNCH

31    SHOULDER PART OF A DIE

33    DIE

35    GROOVE SHAPE PORTION

37    FIRST ROUNDED PART

39    SECOND ROUNDED PART

41    RIB PORTION

43    PORTION CORRESPONDING TO RIB

45    CONVENTIONAL DIE MODEL

47    DIE MODEL OF INVENTION EXAMPLE

49    COMPONENT

**Claims**

1.   A press forming analysis method for predicting a press forming load acting on a press forming die, the press forming analysis method comprising:

  a die model generating step of

    generating a die model having a virtual thickness by a two-dimensional element, and
    setting a boundary condition of the two-dimensional element such that a part corresponding to a rib in a real die is a rigid body and a part other than the rib is a nonrigidity; and

  a press forming load acquiring step of performing press forming analysis using the die model generated by the die model generating step to acquire a press forming load,
  wherein
  the die model generating step includes

    offsetting arrangement of the two-dimensional element by a predetermined distance from a die-face in order to impart the virtual thickness to the die model, and
    setting the boundary condition of the two-dimensional element such that deflection of the die model is equivalent to deflection of the real die according to an offset amount.

2.   The press forming analysis method according to claim 1, wherein the boundary condition in the die model generating step includes any one or a combination of displacement restraint, elastic coefficient, sheet thickness, density, mass, and yield strength.

3. The press forming analysis method according to claim 1 or 2, wherein the two-dimensional element is an elastic or elastoplastic two-dimensional element.

4. A press forming analysis device for predicting a press forming load acting on a press forming die, the press forming analysis device comprising:

   a die model generation unit configured to

      generate a die model having a virtual thickness by a two-dimensional element, and
      set a boundary condition of the two-dimensional element such that a part corresponding to a rib in a real die is a rigid body and a part other than the rib is a nonrigidity; and

   a press forming load acquisition unit configured to perform press forming analysis using the die model generated by the die model generation unit to acquire a press forming load, wherein
   the die model generation unit is configured to

      offset arrangement of the two-dimensional element by a predetermined distance from a die-face in order to impart the virtual thickness to the die model, and
      set the boundary condition of the two-dimensional element such that deflection of the die model is equivalent to deflection of the real die according to an offset amount.

5. A press forming analysis program causing a computer to function as the press forming analysis device according to claim 4.

6. A press formed part manufacturing method comprising:

   a step of acquiring the press forming load by the press forming analysis method according to claim 1 or 2;
   a press machine selecting step of selecting an appropriate press machine having a pressing capacity for the acquired press forming load; and
   a press forming step of performing press forming using the press machine.

# FIG.1

```
        ┌─────────────┐
        │    START    │
        └──────┬──────┘
               │
               ▼
┌──────────────────────────────────┐
│   DIE MODEL GENERATING STEP      │─── S1
└──────────────┬───────────────────┘
               │
               ▼
┌──────────────────────────────────┐
│  PRESS FORMING LOAD ACQUIRING STEP │─── S3
└──────────────┬───────────────────┘
               │
               ▼
        ┌─────────────┐
        │     END     │
        └─────────────┘
```

# FIG.2

# FIG.3

# FIG.4

(a)

(b)

# FIG.5

45

# FIG.6

47

# FIG.7

(a)

MESH MODEL OF DIE

REAL DIE-FACE
(BLANK CONTACT SIDE)

(BACK SURFACE OF DIE)

$t/2$

THICK-NESS:t

(b)

MESH MODEL OF DIE

VIRTUAL DIE-FACE
(BLANK CONTACT SIDE)

(BACK SURFACE OF VIRTUAL DIE)

$t/2$

THICK-NESS:t

# FIG.8

(a)

30mm

15

MESH MODEL OF DIE

REAL DIE-FACE
(BLANK CONTACT SIDE)

R6

ROUNDED PART

R'

(BACK SURFACE OF DIE)

(b)

30mm

15

MESH MODEL OF DIE

VIRTUAL DIE-FACE
(BLANK CONTACT SIDE)

R''
(ROUNDED PART CANNOT BE REPRODUCED)

R'

(BACK SURFACE OF VIRTUAL DIE)

# FIG.9

(a)

3mm · MESH MODEL OF DIE

1.5mm · REAL DIE-FACE (BLANK CONTACT SIDE)

(BACK SURFACE OF DIE)

R6

ROUNDED PART

R'

(b)

3mm · MESH MODEL OF DIE

1.5mm · VIRTUAL DIE-FACE (BLANK CONTACT SIDE)

(BACK SURFACE OF DIE)

R6

R''
(R CAN BE REPRODUCED)

R'

# FIG.10

(a)

LOAD:P

DEFLECTION δ

L

t

b

FIXED

(b)

LOAD:P

δ'

t/a

b

L

# FIG.11

# FIG.12

# FIG.13

# EP 4 575 878 A1

## INTERNATIONAL SEARCH REPORT

| International application No. |
| --- |
| **PCT/JP2023/022068** |

| | |
| --- | --- |
| **A.** | **CLASSIFICATION OF SUBJECT MATTER** |

*G06F 30/23*(2020.01)i; *B21D 22/00*(2006.01)i; *G06F 113/22*(2020.01)n
FI:     G06F30/23; B21D22/00; G06F113:22

According to International Patent Classification (IPC) or to both national classification and IPC

| | |
| --- | --- |
| **B.** | **FIELDS SEARCHED** |

Minimum documentation searched (classification system followed by classification symbols)

G06F30/00-30/28; B21D22/00-22/30; B21D37/00-37/20

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| A | WO 2016/017775 A1 (NIPPON STEEL & SUMITOMO METAL CORP) 04 February 2016 (2016-02-04)<br>    paragraphs [0039]-[0047] | 1-6 |
| A | JP 2019-175105 A (JSOL CORP) 10 October 2019 (2019-10-10)<br>    abstract | 1-6 |
| A | JP 2002-219523 A (TOYOTA MOTOR CORP) 06 August 2002 (2002-08-06)<br>    abstract | 1-6 |

☐ Further documents are listed in the continuation of Box C.      ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **01 August 2023** | **15 August 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/022068**

| Patent document cited in search report | | | Publication date (day/month/year) | Patent family member(s) | | | Publication date (day/month/year) |
|---|---|---|---|---|---|---|---|
| WO | 2016/017775 | A1 | 04 February 2016 | US 2017/0140081 A1 paragraphs [0064]-[0072] EP 3151138 A1 KR 10-2017-0023120 A CN 106575314 A | | | |
| JP | 2019-175105 | A | 10 October 2019 | (Family: none) | | | |
| JP | 2002-219523 | A | 06 August 2002 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5610574 B